# FASCICULE DE BREVET EUROPEEN

(11) **EP 3 441 902 B1**
(45) Date de publication et mention de la délivrance du brevet: **29.09.2021**
(21) Numéro de dépôt: 18306089.6
(22) Date de dépôt: 08.08.2018
(51) Int. Cl.: G06F 21/55, H04L 9/00, H04L 29/06, H04W 12/12

(54) **PROCÉDÉ DE PROTECTION D'UN DISPOSITIF ÉLECTRONIQUE CONTRE DES ATTAQUES PAR INJECTION DE FAUTE**
SCHUTZVERFAHREN EINER ELEKTRONISCHEN VORRICHTUNG GEGEN ANGRIFFE DURCH FEHLERINJEKTION
METHOD FOR PROTECTING AN ELECTRONIC DEVICE AGAINST FAULT-INJECTION ATTACKS

(30) Priorité: 09.08.2017 FR 1757616
(43) Date de publication de la demande: 13.02.2019
(73) Titulaire: Idemia Identity & Security France, 92130 Issy-les-Moulineaux (FR)
(72) Inventeur: MAGHREBI, Houssem, 92130 Issy Les Moulineaux (FR); GESLAIN, Raphaël, 92130 Issy Les Moulineaux (FR); PEPIN, Cyrille, 92130 Issy Les Moulineaux (FR); DAILLE-LEVEFRE, David, 92130 Issy Les Moulineaux (FR)
(74) Mandataire: Regimbeau

(56) Documents cités:
- US-A1- 2010 027 432
- US-A1- 2011 202 948
- US-A1- 2014 020 097
- US-A1- 2016 226 901
- US-A1- 2017 155 674

## Description

### DOMAINE DE L'INVENTION

La présente invention concerne un procédé de protection d'un dispositif électronique contre des attaques par injection de faute.

### ETAT DE LA TECHNIQUE

De façon connue, une attaque par injection de faute consiste à perturber l'environnement physique d'un dispositif électronique qui exécute un programme, de sorte à modifier la valeur mémorisée par le dispositif d'une variable destinée à être utilisée par le programme. De telles perturbations peuvent être produites de différentes manières : variation d'une tension d'alimentation, variation d'une fréquence d'horloge du dispositif, émission de rayonnement électromagnétique ou laser, etc.

Pour protéger un dispositif électronique contre des attaques par injection de faute, il a été proposé un procédé comprenant les étapes suivantes :
- détection d'anomalies susceptible d'injecter une faute dans le dispositif électronique ou d'être provoquées par une injection de faute dans le dispositif électronique,
- incrémenter un compteur d'anomalies chaque fois qu'une anomalie est détectée,
- comparaison entre le compteur d'anomalies et un seuil,
- mise en oeuvre d'une mesure de protection du dispositif électronique lorsque le nombre d'anomalies comptées atteint le seuil prédéterminé.

Le compteur d'anomalie n'est jamais décrémenté au cours de la vie du dispositif électronique.

La mesure de protection mise en œuvre peut être parfois radicale. A titre d'exemple, certaines spécifications recommandent de rendre le dispositif électronique totalement inutilisable, par exemple en effaçant le contenu complet de la mémoire non volatile du dispositif électronique.

Or, il se trouve que certaines anomalies susceptibles d'injecter une faute dans le dispositif électronique ne sont pas provoquées par une attaque intentée par une personne malveillante, mais sont simplement provoquées par une mauvaise manipulation du dispositif électronique par son utilisateur, sans que ce dernier ne soit malintentionné. A titre d'exemple, le dispositif électronique peut être amené à exécuter un certain traitement impliquant une communication de données avec un autre dispositif. A cet effet, le dispositif électronique peut être mis en contact électrique avec cet autre dispositif. Une rupture accidentelle de la communication entre les deux dispositifs en présence par rupture de ce contact électrique peut être causée accidentellement et être catégorisée comme anomalie susceptible d'injecter une faute dans le dispositif électronique.

Lorsque ces manipulations se produisent un trop grand nombre de fois, le seuil d'anomalies est dépassé et la mesure de protection est mise en œuvre au détriment de l'utilisateur du dispositif électronique, alors qu'aucune attaque n'a réellement été intentée. La demande de brevet US2014/0020097 A1 décrit une méthode de détection d'attaque par injection de fautes prenant en compte le nombre de fautes détectées sur une période donnée.

### EXPOSE DE L'INVENTION

Un objectif visé par l'invention est de proposer un procédé qui permette de protéger un dispositif contre des attaques par injection de faute, sans que de mauvaises manipulations d'un utilisateur du dispositif électronique ne soient confondues avec de telles attaques.

Il est dès lors proposé le procédé tel que défini en revendication 1.

Le procédé proposé se fonde sur la constatation suivante : des anomalies temporellement groupées sont davantage susceptibles d'être la conséquence d'attaques que des anomalies ponctuelles, très espacées dans le temps.

L'utilisation du deuxième seuil pour conditionner l'incrémentation du compteur d'anomalies permet d'exploiter astucieusement cette constatation.

En effet, si un nombre relativement grand d'anomalies (supérieur au deuxième seuil) est détecté pour N traitements prédéterminés, on peut raisonnablement supposer que ces anomalies ne sont pas fortuites et sont par conséquent sanctionnées par une incrémentation du compteur d'anomalie.

En revanche, une telle sanction n'est pas appliquée lorsque trop peu d'anomalies sont détectées pour N traitements prédéterminés. En conséquence, la mise en oeuvre d'une mesure de protection n'est pas mise en œuvre ou est tout du moins mise en œuvre de manière retardée lorsque le dispositif électronique subit de ponctuellement des mauvaises manipulations.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un dispositif électronique selon un mode de réalisation de l'invention,
- La figure 2 est un organigramme d'étapes du procédé selon le premier mode de mise en oeuvre de l'invention,
- La figure 3 est un organigramme d'étapes du procédé selon le premier mode de mise en oeuvre de l'invention,

### DESCRIPTION DETAILLEE DE L'INVENTION

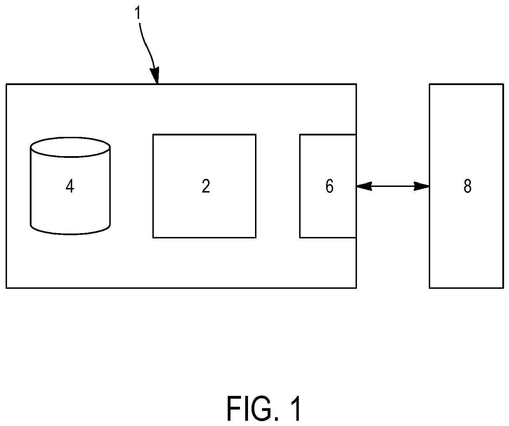

En référence à la **figure 1****,** un dispositif électronique 1 comprend au moins un processeur 2, au moins une mémoire non volatile 4 et une interface de communication 6 avec un autre dispositif 8.

La mémoire non volatile 4 mémorise des programmes et des données destinées à être manipulées par les programmes. Cette mémoire est par exemple de type flash ou eeprom.

La mémoire 4 mémorise notamment :
- au moins un programme cible, dont le fonctionnement est susceptible d'être affecté par une attaque par injection de faute,
- un programme de contrôle dont la fonction est de protéger le dispositif contre de telles attaques par injection de faute.

Le processeur 2 est configuré pour exécuter le programme de contrôle, notamment en parallèle d'au moins un programme cible.

L'interface de communication 6 comprend par exemple au moins un contact électrique destiné à être mis en contact électrique avec un contact de l'autre dispositif 6, de sorte que des signaux électriques porteurs de données puissent être communiqués entre les deux dispositifs. En variante ou à titre complémentaire, l'interface de communication comprend une antenne radio, par exemple pour établir une communication du type « en champ proche » (NFC).

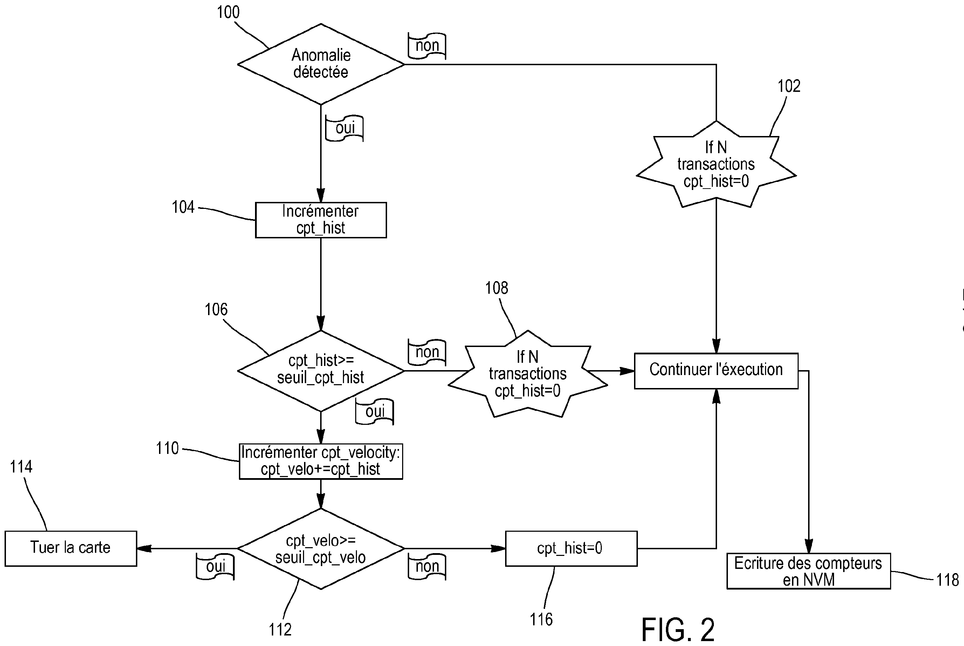

En référence à la **figure 2****,** le programme de contrôle est configuré pour mettre en œuvre un procédé comprenant les étapes suivantes, dans un premier mode de réalisation.

Le programme de contrôle utilise plusieurs données prédéterminées :
- un nombre N de traitements prédéterminés mis en œuvre par au moins un des programmes cibles. Ce nombre N peut concerner un seul et même traitement ou bien plusieurs traitements différents.
- un premier seuil appelé « seuil_cpt_hist »,
- un deuxième seuil appelé « seuil_cpt_velo ».

Ces données sont présentes dans la mémoire non volatile avant la première utilisation du dispositif électronique.

Les traitements prédéterminés peuvent par exemple être des traitements entraînant une incrémentation du compteur de vélocité (« velocity counter ») décrit dans l'une des quelconques spécifications suivantes :
- « Security Guidelines for Java Card εt GlobalPlatform Implementations including Mobile Payments » dont la version 1.0 a été publiée en novembre 2010,
- « Security Guidelines for JavaCard Platform Implementation » dans sa version publiée en août 2006,
- « Security Guidelines for Global Platform Implementations » dans sa version publiée en Mai 2010.

Dans la suite, on prendra l'exemple non limitatif de traitements prédéterminés comprenant la mise en œuvre d'une transaction bancaire.

Le programme utilise également trois compteurs alloués dans la mémoire non volatile.
- un compteur de traitements prédéterminés,
- un premier compteur d'anomalies « *cpt_hist »*
- un deuxième compteur d'anomalies « « *cpt_velo ».*

Ces trois compteurs sont à zéro lors du premier démarrage du programme de contrôle.

Le programme de contrôle dispose de moyens connus en eux-mêmes pour détecter qu'un des traitements prédéterminés a été exécuté par le processeur 2. A chaque nouvelle exécution d'un de ces traitements, le compteur de traitements est incrémentéde 1 (ou de - 1 - cas d'une incrémentation négative).

Par ailleurs, le programme de contrôle met en œuvre les étapes suivantes, par exemple de manière asynchrone avec la détection des traitements et l'incrémentation du compteur de traitements.

Le programme de contrôle vérifie si une anomalie a été détectée (étape 100). Cette vérification 100 est par exemple mise en œuvre périodiquement.

Par exemple, l'un des programmes cibles est amené à comparer une donnée d'épreuve saisie par un utilisateur avec une donnée secrète de référence (typiquement un code PIN). Une anomalie peut être considérée comme détectée lorsque la donnée d'épreuve et la donnée secrète de référence sont différentes (mise en avidence d'une anomalie par vérification de DAP ou « Data Authentication Pattern » selon la terminologie anglosaxonne généralement utilisée).

Si aucune anomalie n'a été détectée alors le programme de contrôle compare alors le compteur de traitements avec le nombre N. Si le compteur de traitements est supérieur ou égal à N, alors le premier compteur d'anomalies *cpt_hist* est remis à zéro (étape 102). Sinon, le premier compteur d'anomalies *cpt_hist* n'est pas remis à zéro.

En réponse à une détection d'anomalie 100, le programme de contrôle incrémente le premier compteur d'anomalie *cpt_hist* d'un premier incrément, par exemple égal à 1 (étape 104).

Le programme de contrôle compare ensuite le compteur *cpt_hist* avec le premier seuil *seuil_cpt_hist* (étape 106).

Si le premier compteur d'anomalies *cpt_hist* est strictement inférieur au premier seuil *seuil_cpt_hist,* alors le deuxième compteur *cpt_velo* n'est pas incrémenté, mais le programme de contrôle compare alors le compteur de traitements avec le nombre N. Si le compteur de traitements est supérieur ou égal à N, alors le premier compteur d'anomalies *cpt_hist* est remis à zéro (étape 108). Sinon, le premier compteur d'anomalies *cpt_hist* n'est pas remis à zéro.

Si le premier compteur d'anomalies *cpt_hist* est supérieur ou égal au premier seuil *seuil_cpt_hist,* alors le deuxième compteur est incrémenté d'un deuxième incrément (étape 110). Le deuxième incrément dépend de la valeur courante du premier compteur *cpt_hist.*

En particulier, le deuxième incrément peut être égal à la valeur courante du premier compteur *cpt_hist.* Ce choix présente l'avantage d'être conforme aux recommandations de GlobalPlatform.

Lorsque le deuxième compteur *cpt_velo* a été incrémenté, le programme de contrôle compare le deuxième compteur *cpt_velo* au deuxième seuil *seuil_cpt_velo* (étape 112).

Si le deuxième compteur d'anomalies *cpt_velo* est supérieur ou égal au deuxième seuil *seuil_cpt_velo,* alors le programme de contrôle met en œuvre une mesure de protection du dispositif électronique 1 (étape 114). Il est en effet supposé dans un tel cas que le dispositif 1 a fait l'objet d'une attaque par injection de faute.

La mesure de protection comprend par exemple un effacement du contenu de la mémoire non volatile, en totalité ou en partie, de sorte à rendre le dispositif inutilisable.

Si le deuxième compteur *cpt_velo* est strictement inférieur au deuxième seuil *seuil_cpt_velo,* le premier compteur d'anomalies *cpt_hist* est remis à zéro (étape 116).

Le programme de contrôle écrit par ailleurs dans la mémoire non volatile 4 la valeur de chaque compteur à chaque fois que ce compteur est modifié (étape 118).

En outre, à chaque fois qu'un des traitements prédéterminés est exécuté une fois par le processeur 2, le programme de contrôle incrémente le compteur de traitements.

Au cours de la mise en œuvre de ce procédé de protection, on peut relever que le compteur *cpt_velo* n'est incrémenté que si un nombre d'anomalies supérieur ou égal au seuil *seuil_cpt_hist* s'est produit au cours d'une période de durée variable durant laquelle s'est produit N traitements prédéterminés.

Le compteur *cpt_velo* n'est jamais décrémenté, en conformité avec les spécifications GlobalPlatform.

Il convient de noter que le programme de contrôle peut :
- compter les anomalies survenues et attendre que N traitements prédéterminés soient survenus pour décider si le compteur *cpt_velo* doit être incrémenté ou non (auquel cas la période considérée, de durée variable, arrive à terme lorsque le N^{ième} traitement prédéterminé vient de se terminer), ou bien
- compter les traitements prédéterminés et attendre que *seuil_cpt_hist* anomalies soient survenues pour décider si le compteur *cpt_velo* doit être incrémenté ou non (auquel cas la période considérée prend fin lorsque le nombre d'anomalies prédéterminé *seuil_cpt_hist* est atteint).

La survenance d'une nouvelle anomalie ou la mise en œuvre d'un des traitements prédéterminés après le terme de cette période de durée variable marque le début d'une nouvelle période au cours de laquelle les étapes du procédé sont répétées.

Pour contourner le procédé de protection mis en œuvre, un attaquant désirant effectuer une injection de faute devra forcément espacer ses attaques dans le temps, faute de quoi le dispositif électronique 1 sera rendu inutilisable à l'issue de l'étape 114.

De préférence, au terme d'une période, le programme de contrôle modifie le nombre N de traitements prédéterminés et/ou la valeur du seuil *seuil_cpt_hist.* Une fois cette modification faite, les étapes du procédé sont mises en œuvre au cours d'une nouvelle période. Une telle modification rend le procédé moins prédictible dans le temps. Par conséquent, il est plus difficile pour un attaquant de comprendre la logique du procédé de protection mis en œuvre, et ainsi d'estimer dans quelle mesure ses attaques doivent être espacées dans le temps.

Encore plus préférentiellement, la nouvelle valeur de N ou la nouvelle valeur du seuil *seuil_cpt_hist* est déterminée aléatoirement. Ceci présente l'avantage de rendre le procédé totalement imprédictible.

Par ailleurs, le nombre N ou le seuil *seuil_cpt_hist* est de préférence :
- diminué si le compteur d'anomalie *cpt_velo* a été incrémenté au cours de la période,
- augmenté si le compteur d'anomalie *cpt_velo* n'a pas été incrémenté au cours de la période.

Avec une telle logique de modification, le procédé s'adapte dynamiquement au contexte d'utilisation du dispositif électronique. Il devient plus sévère lorsque le nombre d'anomalie augmente d'une période à l'autre, et devient plus laxiste dans le cas inverse.

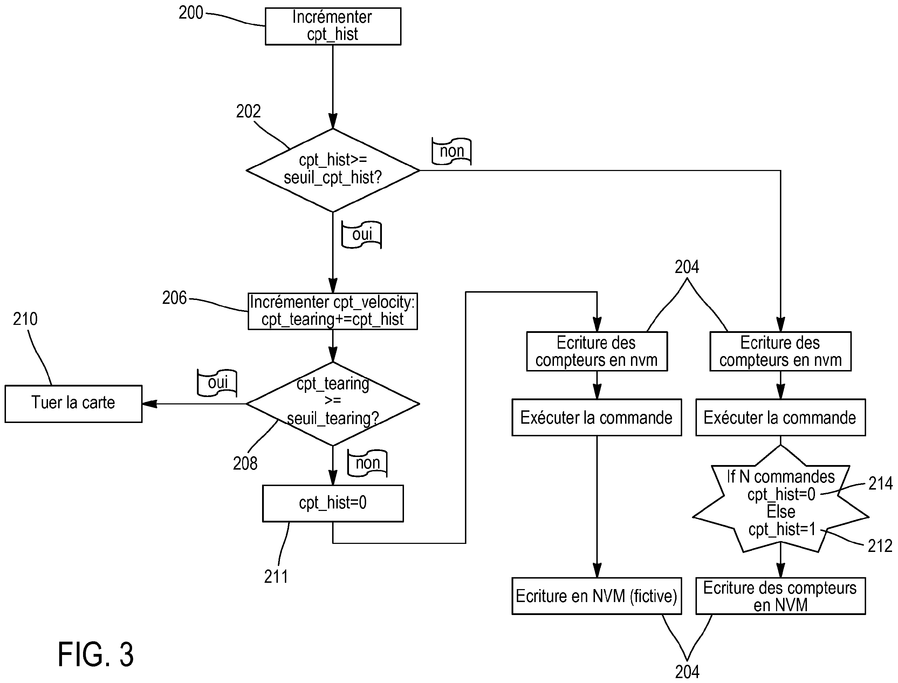

On a illustré en **figure 3** les étapes d'un procédé de protection du dispositif électronique contre des attaques par injection de faute selon un deuxième mode de réalisation.

Une différence avec le procédé selon le premier mode de réalisation est que le compteur *cpt_hist* est incrémenté à titre préventif avant qu'il ne soit détecté une anomalie, puis ensuite décrémenté s'il est confirmé qu'il ne s'est pas produit une anomalie.

Ce deuxième mode de réalisation est particulièrement adapté à la gestion d'anomalies causées par une rupture de communication entre le dispositif électronique et un autre dispositif.

Les traitements prédéterminés scrutés dans ce deuxième mode de réalisation sont typiquement des traitements entraînant une incrémentation du compteur dit de « tearing décrit dans l'une quelconque des spécifications suivantes :
- « Security Guidelines for Java Card εt GlobalPlatform Implementations including Mobile Payments » dont la version 1.0 a été publiée en novembre 2010,
- « Security Guidelines for JavaCard Platform Implementation » dans sa version publiée en août 2006,
- « Security Guidelines for Global Platform Implementations » dans sa version publiée en Mai 2010.

On suppose qu'au moins un des traitements prédéterminés est un traitement susceptible d'être interrompu (c'est-à-dire stoppé anormalement) par une rupture anormale de communication entre le dispositif électronique et un autre dispositif. Ce traitement est appelé dans la suite « traitement de référence ». Le traitement de référence comprend par exemple une commande ADPU.

Dans ce mode de réalisation, le deuxième compteur *cpt_velo* est remplacé par un compteur *cpt_tearing* et le deuxième seuil *seuil_cpt_velo* est remplacé par un seuil *seuil_cpt_tearing.*

Le procédé selon le deuxième mode de réalisation comprend les étapes suivantes.

Le programme de contrôle dispose de moyens pour détecter que l'exécution du traitement de référence par le dispositif électronique a été lancé. A chaque démarrage du traitement de référence, le compteur de traitements est incrémenté, par exemple de 1 (étape 200).

Le programme de contrôle compare ensuite le compteur de traitements *cpt_hist* avec le premier seuil *seuil_cpt_hist* (étape 202).

Si le premier compteur d'anomalies *cpt_hist* est strictement inférieur au premier seuil *seuil_cpt_hist,* alors le deuxième compteur *cpt_tearing* n'est pas incrémenté. Ensuite, le programme de contrôle écrit ou met à jour par ailleurs dans la mémoire 4 la valeur du premier compteur *cpt_hist* qui vient d'être incrémenté (étape 204).

Si le premier compteur d'anomalies *cpt_hist* est supérieur ou égal au premier seuil *seuil_cpt_hist,* alors le deuxième compteur *seuil_tearing* est incrémenté d'un deuxième incrément (étape 206). Le deuxième incrément dépend de la valeur courante du premier compteur *cpt_hist.*

En particulier, le deuxième incrément peut être égal à la valeur courante du premier compteur. Ce choix présente l'avantage d'être conforme aux recommandations de GlobalPlatform.

Lorsque le deuxième compteur *cpt_tearing* a été incrémenté 206, le programme de contrôle compare le deuxième compteur *cpt_tearing* au deuxième seuil *seuil_cpt_tearing* (étape 208).

Si le deuxième compteur *cpt_tearing* est supérieur ou égal au deuxième seuil *seuil_cpt_tearing,* alors le programme de contrôle met en œuvre une mesure de protection du dispositif électronique (210). Il est en effet supposé dans un tel cas que le dispositif a fait l'objet d'une attaque par injection de faute. La mesure de protection comprend par exemple un effacement du contenu de la mémoire non volatile, en totalité ou en partie, de sorte à rendre le dispositif inutilisable.

Si le deuxième compteur *cpt_tearing* est strictement inférieur au deuxième seuil, le deuxième compteur est remis à zéro (étape 211).

Le programme de contrôle écrit (ou met à jour) par ailleurs dans la mémoire volatile la valeur de chaque compteur modifié, après la remise à zéro (étape 204).

Par ailleurs, une fois qu'un des traitements prédéterminés se termine, le programme de contrôle vérifie s'il s'est produit une anomalie au cours de la mise en œuvre du traitement de référence.

Le programme considère qu'il s'est produit une telle anomalie lorsque le traitement a été interrompu de manière anormale avant sa complétion. Lorsque le dispositif électronique 1 communique avec l'autre dispositif 8 par un canal de communication sans fil, une telle interruption peut être causée par un éloignement mutuel accidentel des deux dispositifs 1 et 8 en présence. Lorsque ces deux dispositifs 1 et 8 communiquent par contact électrique, cette interruption peut être causée par rupture accidentelle de ce contact électrique.

Si le programme de contrôle ne détecte pas d'anomalie, il décrémente le premier compteur *cpt_hist* (étape 212). Sinon (une anomalie a été détectée), le programme de contrôle ne décrémente pas le premier compteur *cpt_hist.*

En outre, le programme de contrôle compte le nombre d'exécutions de traitements prédéterminés. Le programme de contrôle incrémente par exemple le compteur de traitements de 1 à chaque terminaison, normale ou anormale, d'un traitement prédéterminé.

Lorsque ce compteur de traitements atteint N, le programme de contrôle remet à zéro le premier compteur *cpt_hist* (étape 214).

Le programme de contrôle écrit et met à jour par ailleurs dans la mémoire non volatile 4 la valeur de chaque compteur modifié (étape 204).

On notera qu'il y a toujours une écriture, qu'il y ait ou non une attaque, le programme utilisant à cet effet le cas échéant des écritures fictives. En effet, si on incrémentait un compteur seulement lorsqu'il y a une attaque il serait aisé pour un attaquant de la supprimer / ou contourner.

Le compteur *cpt_tearing* n'est jamais décrémenté, en conformité avec les spécifications GlobalPlatform.

## Revendications

1. Procédé de protection d'un dispositif électronique (1) contre des attaques par injection de faute, le procédé comprenant des étapes de
• détection (100) d'anomalies susceptibles d'injecter une faute dans le dispositif électronique (1) ou d'être provoquées par une injection de faute dans le dispositif électronique (1),
• incrémentation (110, 206) d'un compteur d'anomalies *(cpt_velo, cpt_tearing)* en fonction des anomalies détectées,
• comparaison (112, 208) entre le compteur d'anomalies *(cpt_velo, cpt_tearing)* et un premier seuil *(seuil_cpt_velo, seuil_cpt_tearing),*
• mise en œuvre d'une mesure de protection (114, 210) du dispositif électronique (1) lorsque le nombre d'anomalies comptées atteint le premier seuil *(seuil_cpt_velo, seuil_cpt_tearing),*
le procédé étant **caractérisé en ce que** le compteur d'anomalie *(cpt_velo, cpt_tearing)* n'est incrémenté (110, 206) que s'il a été détecté :
• un nombre d'anomalies supérieur ou égal à un deuxième seuil *(seuil_cpt_hist)* strictement inférieur au premier seuil *(seuil_cpt_velo, seuil_cpt_tearing)* au cours d'une période durant laquelle s'est produit un nombre prédéterminé (N) de traitements prédéterminés, ou
• un nombre de traitements prédéterminés inférieur à un nombre prédéterminé (N) de traitements prédéterminés au cours d'une période durant laquelle s'est produit un nombre d'anomalies prédéterminé supérieur ou égal au deuxième seuil (seuil_cpt_hist),
dans lequel un traitement prédéterminé comprend la mise en œuvre d'une transaction bancaire ou une commande ADPU.

2. Procédé selon la revendication 1, dans lequel le compteur d'anomalies *(seuil_cpt_velo, seuil_cpt_tearing)* est incrémenté d'une valeur égale au nombre d'anomalies détectées au cours de la période.

3. Procédé selon l'une des revendications précédentes, comprenant en outre des étapes de
• au terme de la période, modification du nombre prédéterminé de traitements prédéterminés et/ou du deuxième seuil,
• après l'étape de modification, répétition des étapes de détection et d'incrémentation du compteur d'anomalies au cours d'une nouvelle période.

4. Procédé selon la revendication précédente, dans lequel la modification attribue au nombre prédéterminé de traitements prédéterminés et/ou au deuxième seuil une nouvelle valeur déterminée aléatoirement.

5. Procédé selon l'une des revendications 3 et 4, dans lequel, au cours de l'étape de modification, le nombre prédéterminé d'évènements prédéterminés et/ou le deuxième seuil est :
• diminué si le compteur d'anomalie a été incrémenté au cours de la période,
• augmenté si le compteur d'anomalie n'a pas été incrémenté au cours de la période.

6. Procédé selon l'une des revendications 1 à 5, comprenant des étapes de
• mise à zéro d'un deuxième compteur *(cpt_hist)* au début de la période,
• incrémentation du deuxième compteur *(cpt_hist)* en réponse à une détection d'anomalie (100) survenue au cours de la période,
• si le deuxième compteur *(cpt_hist)* est supérieur ou égal au deuxième seuil *(seuil_cpt_hist)* au terme de la période, incrémentation (110) du compteur d'anomalies *(cpt_velo)* avec la valeur du deuxième compteur *(cpt_hist),*
• si le deuxième compteur *(cpt_hist)* n'est pas supérieur ou égal au deuxième seuil *(seuil_cpt_hist)* au terme de la période, pas d'incrémentation du compteur d'anomalies.

7. Procédé selon l'une des revendications 1 à 5, comprenant des étapes de
• mise à zéro d'un deuxième compteur *(cpt_hist)* au début de la période,
• incrémentation (200) du deuxième compteur *(cpt_hist)* chaque fois qu'un traitement prédéterminé est exécuté par le dispositif électronique (1),
• décrémentation (212) du deuxième compteur *(cpt_hist)* sélectivement chaque fois qu'un traitement prédéterminé a été exécuté jusqu'à son terme par le dispositif électronique (1),
• si le deuxième compteur *(cpt_hist)* est supérieur ou égal au deuxième seuil *(seuil_cpt_hist)* au terme de la période, incrémentation (206) du compteur d'anomalies d'une valeur égale au deuxième compteur *(cpt_hist).*

8. Procédé selon la revendication précédente, dans lequel le traitement prédéterminé est un traitement interruptible par une rupture anormale de communication entre le dispositif électronique (1) et un autre dispositif (8).

9. Procédé selon l'une des revendications précédentes, dans lequel la mise en oeuvre d'une mesure de protection (114, 211) comprend l'effacement dans une mémoire du dispositif électronique d'un contenu susceptible d'avoir été modifié par une attaque par injection de faute.

10. Produit programme d'ordinateur comprenant des instructions de code de programme pour l'exécution des étapes du procédé selon l'une des revendications précédentes, lorsque ce procédé est exécuté par au moins un processeur.

## Patentansprüche

1. Verfahren zum Schutz einer elektronischen Vorrichtung (1) gegen Angriffe durch Fehlerinjektion, wobei das Verfahren folgende Schritte umfasst
• Ermitteln (100) von Anomalien, die einen Fehler in die elektronische Vorrichtung (1) injizieren oder von einer Fehlerinjektion in die elektronische Vorrichtung (1) verursacht werden können,
• Inkrementieren (110, 206) eines Anomaliezählers *(cpt_velo, cpt_tearing)* in Abhängigkeit von den ermittelten Anomalien,
• Vergleichen (112, 208) zwischen dem Anomaliezähler *(cpt_velo, cpt_tearing)* und einem ersten Grenzwert *(seuil_cpt_velo, seuil_cpt_tearing),*
• Durchführen einer Schutzmessung (114, 210) der elektronischen Vorrichtung (1), wenn die Anzahl gezählter Anomalien den ersten Grenzwert *(seuil_cpt_velo, seuil_cpt_tearing)* erreicht,
wobei das Verfahren **dadurch gekennzeichnet ist, dass** der Anomaliezähler *(cpt_velo, cpt_tearing)* nur inkrementiert wird (110, 206), wenn ermittelt wurde:
• eine Anzahl von Anomalien größer als der oder gleich einem zweiten Grenzwert *(seuil_cpt_hist)* strikt kleiner als der erste Grenzwert *(seuil_cpt_velo, seuil_cpt_tearing)* während eines Zeitraums, in dem eine vorher festgelegte Anzahl (N) vorher festgelegter Verarbeitungen erfolgte, oder
• eine Anzahl vorher festgelegter Verarbeitungen kleiner als eine vorher festgelegte Anzahl (N) vorher festgelegter Verarbeitungen während eines Zeitraums, in dem eine vorher festgelegte Anzahl größer als der oder gleich dem zweiten Grenzwert (seuil_cpt_hist) erfolgte,
wobei eine vorher festgelegte Verarbeitung die Durchführung einer Banktransaktion oder einen ADPU-Befehl umfasst.

2. Verfahren nach Anspruch 1, wobei der Anomaliezähler *(seuil_cpt_velo, seuil_cpt_tearing)* mit einem Wert inkrementiert wird, der gleich der Anzahl während des Zeitraums ermittelter Anomalien ist.

3. Verfahren nach einem der vorangehenden Ansprüche, umfassend ferner folgende Schritte
• am Ende des Zeitraums, Ändern der vorher festgelegten Anzahl vorher festgelegter Verarbeitungen und/oder des zweiten Grenzwerts,
• nach dem Schritt des Änderns, Wiederholen der Schritte des Ermittelns und des Inkrementierens des Anomaliezählers während eines neuen Zeitraums.

4. Verfahren nach vorangehendem Anspruch, wobei die Änderung der vorher festgelegten Anzahl vorher festgelegter Verarbeitungen und/oder dem zweiten Grenzwert einen neuen, zufällig bestimmten Wert zuweist.

5. Verfahren nach einem der Ansprüche 3 und 4, wobei während des Änderungsschritts die vorher festgelegte Anzahl vorher festgelegter Ereignisse und/oder der zweite Grenzwert:
• verringert wird, wenn der Anomaliezähler während des Zeitraums inkrementiert wurde,
• erhöht wird, wenn der Anomaliezähler während des Zeitraums nicht inkrementiert wurde.

6. Verfahren nach einem der Ansprüche 1 bis 5, umfassend folgende Schritte
• Nullstellen eines zweiten Zählers *(cpt_hist)* zu Beginn des Zeitraums,
• Inkrementieren des zweiten Zählers *(cpt_hist)* als Antwort auf eine während des Zeitraums erfolgte Anomaliedetektion (100),
• wenn der zweite Zähler (*cpt_hist*) größer als der oder gleich dem zweiten Grenzwert *(seuil_cpt_hist)* am Ende des Zeitraums ist, Inkrementieren (110) des Anomaliezählers *(cpt_velo)* mit dem Wert des zweiten Zählers *(cpt_hist),*
• wenn der zweite Zähler *(cpt_hist)* nicht größer als der oder gleich dem zweiten Grenzwert *(seuil_cpt_hist)* am Ende des Zeitraums ist, kein Inkrementieren des Anomaliezählers.

7. Verfahren nach einem der Ansprüche 1 bis 5, umfassend folgende Schritte
• Nullstellen eines zweiten Zählers *(cpt_hist)* zu Beginn des Zeitraums,
• Inkrementieren (200) des zweiten Zählers *(cpt_hist)* jedes Mal, wenn eine vorher festgelegte Verarbeitung von der elektronischen Vorrichtung (1) ausgeführt wurde,
• selektives Dekrementieren (212) des zweiten Zählers *(cpt_hist)* jedes Mal, wenn eine vorher festgelegte Verarbeitung von der elektronischen Vorrichtung (1) bis zu ihrem Ende ausgeführt wurde,
• wenn der zweite Zähler (*cpt_hist*) größer als der oder gleich dem zweiten Grenzwert *(seuil_cpt_hist)* am Ende des Zeitraums ist, Inkrementieren (206) des Anomaliezählers mit einem Wert, der gleich dem zweiten Zähler *(cpt_hist)* ist.

8. Verfahren nach vorangehendem Anspruch, wobei die vorher festgelegte Verarbeitung eine Verarbeitung ist, die durch eine anormale Kommunikationsunterbrechung zwischen der elektronischen Vorrichtung (1) und einer anderen Vorrichtung (8) unterbrechbar ist.

9. Verfahren nach einem der vorangehenden Ansprüche, wobei die Durchführung einer Schutzmessung (114, 211) das Löschen, in einem Speicher der elektronischen Vorrichtung, eines Inhalts umfasst, der von einem Angriff durch Fehlerinjektion geändert worden sein könnte.

10. Rechnerprogrammprodukt, umfassend Programmcodebefehle für die Ausführung der Schritte des Verfahrens nach einem der vorangehenden Ansprüche, wenn dieses Verfahren von mindestens einem Prozessor ausgeführt wird.

## Claims

1. A method for protection of an electronic device (1) against attacks by fault injection, the method comprising steps of:
• detection (100) of anomalies likely to inject a fault in the electronic device (1) or be caused by a fault injection in the electronic device (1),
• incrementation (110, 206) of an anomaly counter **(cpt_velo, cpt_tearing)** as a function of the detected anomalies,
• comparison (112, 208) between the anomaly counter **(cpt_velo, cpt_tearing)** and a first threshold **(seuil_cpt_velo, seuil_cpt_tearing)** ,
• performing a protective measure (114, 210) of the electronic device (1) when the number of counted anomalies reaches the predetermined threshold **(seuil_cpt_velo, seuil_cpt_teahng)** ,
the method being **characterized in that** the anomaly counter **(cpt_velo, cpt_tearing)** is incremented (110, 206) only in case of detection of:
• a number of anomalies greater than or equal to a second threshold **(seuil_cpt_hist)** strictly less than the first threshold **(seuil_cpt_velo, seuil_cpt_tearing)** over a period during which a predetermined number (N) of predetermined implementations occurred, or
• a number of predetermined implementations less than a predetermined number (N) of predetermined implementations over a period during which a predetermined number of anomalies greater than or equal to the second threshold **(seuil_cpt_hist)** occurred,
wherein a predetermined implementation comprises the execution of a bank transaction or an ADPU command.

2. The method according to claim 1, wherein the anomaly counter **(seuil_cpt_velo, seuil_cpt_tearing)** is incremented by a value equal to the number of anomalies detected over the period.

3. The method according to any one the preceding claims, also comprising steps of:
• at the end of the period, modification of the predetermined number of predetermined implementations and/or of the second threshold,
• after the modification step, repetition of the steps for detection and incrementation of the anomaly counter during a new period.

4. The method according to the preceding claim, wherein the modification attributes to the predetermined number of predetermined implementations and/or to the second threshold a new value determined randomly.

5. The method according to any one of claims 3 and 4, wherein, during the modification step, the predetermined number of predetermined events and/or the second threshold is:
• decreased if the anomaly counter has been incremented during the period,
• increased if the anomaly counter has not been incremented during the period.

6. The method according to any one of claims 1 to 5, comprising steps of:
• resetting a second counter **(cpt_hist)** at the start of the period,
• incrementation of the second counter **(cpt_hist)** in response to detection of anomaly (100) occurring during the period,
• if the second counter **(cpt_hist)** is greater than or equal to the second threshold **(seuil_cpt_hist)** at the end of the period, incrementation (110) of the anomaly counter **(cpt_velo)** with the value of the second counter (**cpt_hist**),
• if the second counter **(cpt_hist)** is not greater than or equal to the second threshold **(seuil_cpt_hist)** at the end of the period, no incrementation of the anomaly counter.

7. The method according to any one of claims 1 to 5, comprising steps of:
• resetting a second counter **(cpt_hist)** at the start of the period,
• incrementation (200) of the second counter **(cpt_hist)** each time a predetermined implementation is executed by the electronic device (1),
• decrementation (212) of the second counter **(cpt_hist)** selectively each time a predetermined implementation has been executed to term by the electronic device (1),
• if the second counter **(cpt_hist)** is greater than or equal to the second threshold **(seuil_cpt_hist)** at the end of the period, incrementation (206) of the anomaly counter by a value equal to the second counter (**cpt_hist**).

8. The method according to the preceding claim, wherein the predetermined implementation is an implementation interruptible by abnormal communication disruption between the electronic device (1) and another device (8).

9. The method according to any one the preceding claims, wherein performing a protective measure (114, 211) comprises deletion in a memory of the electronic device of content likely to have been modified by an attack by fault injection.

10. A computer program product comprising program code instructions for carrying out the steps of the method according to any one of the preceding claims, when this method is executed by at least one processor.
